# EUROPEAN PATENT SPECIFICATION

(11) **EP 4 715 845 B1**
(45) Date of publication and mention of the grant of the patent: **18.11.2026**
(21) Application number: 25201922.9
(22) Date of filing: 12.09.2025
(51) Int. Cl.: H01B 7/282, C22C 18/00, C22C 18/02, C22C 18/04, C22C 21/10

(54) **ZINC AND ZINC ALLOYS AS CABLE SHEATHING**
ZINK UND ZINKLEGIERUNGEN ALS KABELUMMANTELUNG
ALLIAGES DE ZINC ET DE ZINC COMME GAINE DE CÂBLE

(30) Priority: 18.09.2024 NO 20240947
(43) Date of publication of application: 25.03.2026
(73) Proprietor: Nexans, 92400 Courbevoie (FR)
(72) Inventor: MAURI, Massimiliano, 1739 Borgenhaugen (NO); SCHAWLANN, Sigurd, 1555 SON (NO); JOHANSON, Audun, 0661 OSLO (NO)
(74) Representative: Acapo Onsagers AS

(56) References cited:
- EP-A1- 2 706 539
- CN-A- 107 705 914
- US-A1- 2018 247 736

## Description

### FIELD OF THE INVENTION

The present invention relates to metallic water barrier materials for power cables and in particular metallic water barrier materials for use in high voltage cables, in particular for subsea applications.

### BACKGROUND

Power cables for intermediate to high voltage ratings typically comprise an inner conductor and several layers provided radially outside of the inner conductor, such as an electric insulation layer, a semiconductive shielding layer, an armouring layer and an outer sheathing.

Power cables commonly comprise a radial water barrier consisting of lead. This relates to submarine power cables but is also relevant for other cables subjected to potential humid environment. Water and humidity are detrimental to electrical insulating materials for all power cables conducting electricity at medium and high voltages.

In particular, subsea cables are exposed to harsh environments that may cause damage to the cables if they are not sufficiently protected against water ingress. Arranged radially outside a cable core comprising the electrical conductor, there may be provided a metallic sheath for electrically shielding and protecting the conductor from moisture.

The metallic sheath of subsea power cables should provide both excellent water barrier properties blocking out any intrusion of water and/or moisture to the conductor and/or insulation of the one or more conductors and sufficient mechanical endurance/resilience ensuring the water barrier property of the inner sheathing remains intact during the desired lifetime of the cable. The metallic sheath may further, advantageously, be electrically conducting to function as an emergency -earthing conductor of electric charges to ground in case short-circuit currents arises in the cable and/or to carry eventual capacitive charging currents to ground.

It is well known in the art to use a lead-based sheath surrounding the cable core. The lead-based sheath is associated with the beneficial effects of being easily processed during manufacturing of the cable, and further the water barrier properties and durability of the cable are advantageous. Lead or lead alloys are thus used as such water barriers in HV cables due to its formability and ease of handling. Alternatives are not fully developed in part due to technical limitations such as function properties (e.g. water permeation), difficulty of handling, cost or limitations in manufacturing method. However, the use of lead is associated with serious environmental concerns. There is thus a desire to provide metal-based materials with similar properties as lead for use as water barrier sheath coverages in HV power cables.

The document US 2014060884 A1 discloses a cable comprising one or more cores comprising a conductor; an insulating layer; and a water-blocking layer. As for the water-blocking layer, the document discloses copper alloys being selected from alloys comprising copper and nickel; copper and beryllium; copper, zinc and aluminium; and copper and zinc.

The document JP H09320353 A discloses a power cable comprising a cable core having at least an insulating layer on the outer periphery of a conductor, a metal coating layer provided on the outer side of the cable core, and In a power cable having an anticorrosion layer provided on the outside thereof, the metal coating layer is a corrugated Cu-Zn alloy coating layer.

Further documents relate to power cables having a water barrier or water protection as there are EP 2 706 539 A1, EP 4261850 A1 or US 2018247736 A1.

The invention solves at least one of the following objects depending on its specific embodiment: An object of the present invention is to provide a water barrier sheath being made of a metal-based material which substitutes lead, wherein the technical performance of the water barrier sheath should be approximately equivalent or better compared to lead based water barrier sheaths. Further, the mechanical and chemical durability of the metal alloy substituting lead should be at least equivalent or better compared to state of the art solutions. Even further, the processibility, i.e. the ease of handling, of the metal alloy substituting lead should be at least equivalent or better compared to state of the art solutions. It is further an object of the invention to provide a water barrier sheath made of a material being accessible in order to prevent supply chain disruptions.

### SUMMARY OF THE INVENTION

The invention's underlying problems are solved by the subject-matter of claim 1. A first aspect of the invention therefore relates to a power cable comprising a cable core comprising an electrical conductor and an electrically insulating layer surrounding the electrical conductor, and a water barrier sheath surrounding the cable core, wherein the water barrier sheath comprises a metal layer, wherein the metal layer comprises zinc, a metal alloy comprising zinc, or a zinc alloy, and wherein the zinc alloy comprises, based on the total weight of the metal alloy, one of the following: 95 wt.% to 99.9 wt.% zinc and 5 wt.% to 0.1 wt.% magnesium; or 90 wt.% to 99.5 wt.% zinc and 10 wt.% to 0.5 wt.% copper; or 87 wt.% to 91.5 wt.% zinc, 8 wt.% to 12 wt.% aluminium, and 0.5 to 1.5 wt.% copper; or 78 wt.% to 92 wt.% zinc, 8 wt.% to 22 wt.% nickel, and the metal alloy comprising zinc comprises, based on the total weight of the metal alloy, one of the following: 90 wt.% to 94 wt.% aluminium, 2 wt.% to 7 wt.% zinc, and 0.1 wt.% to 4 wt.% magnesium; or 82 wt.% to 92 wt.% aluminium, 6 wt.% to 15 wt.% zinc, and 0.5 wt.% to 6 wt.% magnesium; or 90 wt.% to 94 wt.% aluminium, 2 wt.% to 7 wt.% zinc, 1 wt.% to 4 wt.% magnesium, and 1 wt.% to 2 wt.% copper.

The power cable according to the invention requires a cable core and a water barrier sheath. As for the cable core, it comprises at least one electrical conductor and an electrical insulating layer. The main function for the electrical insulating layer is the protection against electrical break down of the power cable. Therefore, the electrical insulating layer is surrounding the at least one electrical conductor. The term "surrounding" in the present application means that is arranged radially outside the electrical conductor in a way that it encloses the electrical conductor. In case there is more than one electrical conductor, the electrical insulating layer is arranged radially outside the further electrical conductors. There could be a layer between the electrical conductor and the electrical insulating layer.

The power cable requires a water barrier sheath, which is arranged radially outside the cable core. The water barrier sheath comprises a metal layer, wherein the metal layer comprises zinc, a metal alloy comprising zinc, or a zinc alloy. As far as the metal layer comprises zinc, this alternative embodiment comprises the alternative, where the metal layer consists of zinc. The metal layer comprises in one alternative the metal alloy comprising zinc and in a further alternative the zinc alloy.

The element zinc is associated with the beneficial effect of having a high availability. The abundancy of zinc in the earth crust amounts to 0.007% (cf. https://www.weforum.org/agenda/2021/12/abundance-elements-earth-crust/), which is higher than that of copper or lead. The element zinc is quite evenly distributed geographically. Further, zinc is highly recyclable, which helps extend its availability. Even further, the recyclability of zinc from a chemical viewpoint is very favorable. That is the reason as to why about 30% of zinc used globally comes from recycled sources. The implementation of zinc as sheathing material for power cables represents a high benefit. The invention's underlaying problem in view of an augmented accessibility of materials is thus solved.

The term "metal alloy comprising zinc" is preferably understood in the framework of this application such that zinc is a minor component in the alloy. Different from the understanding of "minor component" in analytical chemistry, the term is understood in the framework of the present application such that the weight percentage based on the total amount of metals in the alloy is 15 wt.% or less, but zinc is present in an amount than a trace, i.e. equal to or more than 1 wt.% based on the total amount of metals in the alloy. That is, the amount of zinc in the metal alloy comprising zinc is from 1 wt.% to 15 wt.%.

The term "zinc alloy" is preferably understood in the framework of this application such that zinc is a main component in the alloy, i.e. the amount of zinc in the alloy based on the total amount of metals in the alloy is higher than 15 wt.% and lower than 100 wt.%.

Due to the higher amount of zinc in the zinc alloy compared to the alloy comprising zinc, it is preferred to use the zinc alloy as material for the sheathing layer.

All alloys add to a total of 100 wt.% of metals. In the framework of the present application, the alloys may all have unavoidable impurities. The amount of unavoidable impurities does not exceed 1 wt.%. The content of unavoidable impurities amounts to 0 to 1% by weight based on the total weight of the alloy. The amount of all metals and unavoidable impurities sums up to 100 % by weight.

In one aspect, the metal alloy comprising zinc, or the zinc alloy may comprise at least one metal X together with unavoidable impurities, wherein X is selected from aluminium, copper, nickel, magnesium, manganese, chromium, or zirconium; preferably wherein X is selected from aluminium, copper, nickel and magnesium, more preferred aluminium, copper and nickel.

In one aspect, the metal layer may comprise a metal alloy comprising zinc or the zinc alloy, wherein the metal alloy comprising zinc, or the zinc alloy comprises at least one metal X together with unavoidable impurities, wherein X is selected from aluminium, copper, magnesium, manganese, chromium, or zirconium; preferably wherein X is selected from aluminium, copper and magnesium.

The zinc alloy comprises, based on the total weight of the metal alloy, one of the following:
95 wt.% to 99.9 wt.% zinc and 5 wt.% to 0.1 wt.% magnesium; preferably 98 wt.% to 99.8 wt.% zinc and 2 wt.% to 0.2 wt.% magnesium; more preferred 99 wt.% to 99.5 wt.% zinc and 1 wt.% to 0.5 wt.% magnesium; or
90 wt.% to 99.5 wt.% zinc and 10 wt.% to 0.5 wt.% copper; preferably 92 wt.% to 97 wt.% zinc and 8 wt.% to 3 wt.% copper; more preferred 94 wt.% to 98 wt.% zinc and 6 wt.% to 2 wt.% copper; or
87 wt.% to 91.5 wt.% zinc, 8 wt.% to 12 wt.% aluminium, and 0.5 to 1.5 wt.% copper; preferably 88 wt.% to 91 wt.% zinc, 9 to 11.5 wt.% aluminium, and 0.8 to 1.4 wt.% copper; or
78 wt.% to 92 wt.% zinc, 8 wt.% to 22 wt.% nickel, preferably 80 wt.% to 90 wt.% zinc, 10 wt.% to 20 wt.% nickel. In all these metal alloys, the content of unavoidable impurities amounts to 0 to 1% by weight based on the total weight of the alloy. The amount of all metals and unavoidable impurities sums up to 100 % by weight.

As for further zinc alloys, here are disclosed the following once: 20 wt.% to 25 wt.% zinc, 1 wt.% to 5 wt.% aluminium, and 70 wt.% to 79 wt.% copper; preferably 22 wt.% to 24 wt.% zinc, 2 wt.% to 4 wt.% aluminium, and 72 wt.% to 74 wt.% copper; or
20 wt.% to 40 wt.% zinc, and 60 wt.% to 80 wt.% copper; preferably 25 wt.% to 35 wt.% zinc, and 65 wt.% to 75 wt.% copper. In all these metal alloys, the content of unavoidable impurities amounts to 0 to 1% by weight based on the total weight of the alloy. The amount of all metals and unavoidable impurities sums up to 100 % by weight.

According to this aspect, zinc is present as a main component in the metal alloy forming the water barrier sheath. Examples of metal alloys comprising 87 wt.% to 91.5 wt.% zinc, 8 wt.% to 12 wt.% aluminium, and 0.5 to 1.5 wt.% copper are represented by metal alloys available as ZA8 or ZA12. It turned out that such zinc alloys are associated with the beneficial effect of being favorably die-casted at temperatures such that further constituents of the power cable are not negatively affected. Metal alloys comprising 78 wt.% to 92 wt.% zinc, and 8 wt.% to 22 wt.% nickel are associated with the beneficial effect of being corrosion resistant.

The metal alloy comprising zinc comprises, based on the total weight of the metal alloy, one of the following:
90 wt.% to 94 wt.% aluminium, 2 wt.% to 7 wt.% zinc, and 1 wt.% to 4 wt.% magnesium; preferably 91 wt.% to 93 wt.% aluminium, 3 wt.% to 6 wt.% zinc, and 1 wt.% to 3 wt.% magnesium;
82 wt.% to 92 wt.% aluminium, 6 wt.% to 15 wt.% zinc, and 0.5 wt.% to 6 wt.% magnesium; preferably 84 wt.% to 90 wt.% aluminium, 8 wt.% to 13 wt.% zinc, and 2 wt.% to 5 wt.% magnesium; or
90 wt.% to 94 wt.% aluminium, 2 wt.% to 7 wt.% zinc, 1 wt.% to 4 wt.% magnesium, and 1 wt.% to 2 wt.% copper; preferably 91 wt.% to 93 wt.% aluminium, 3 wt.% to 6 wt.% zinc, 1 wt.% to 3 wt.% magnesium, and 1.1 wt.% to 1.9 wt.% copper. In all these metal alloys, the content of unavoidable impurities amounts to 0 to 1% by weight based on the total weight of the alloy. The amount of all metals and unavoidable impurities sums up to 100 % by weight.

In one aspect, water barrier sheath of the power cable may be an extruded metal sheath or a longitudinally welded sheath.

According to this embodiment, the water barrier sheath is applied onto the cable core, respectively onto the layer(s) applied onto the electrical conductor, by use of an extrusion or welding technique. The most common technique for welding metal sheathing on high-voltage power cables is longitudinal seam welding. The metal strip comprising the alloy comprising zinc or the metal alloy is formed into a tube shape around the cable core using special forming tools. Then, the longitudinal seam where the edges of the metal strip meet is welded together. Such welding is done continuously as the cable moves through the production line.

In one embodiment of the first aspect, the electrical conductor may be a metal comprising Cu or Al.

High voltage cables typically comprise an electrical conductor comprising copper or aluminum. It may be an alloy of said metals. The electrical conductor may be made of a single strand or multiple strands. If the electrical conductor is made of multiple strands, voids may be filled with a polymeric material.

In one aspect, the power cable may be a subsea cable or a land cable, preferably a subsea cable.

In one aspect, the power cable may comprise at least one of following: three electrical conductors; two electrical conductors; a filler; a tube; a glass fibre.

In one aspect, the cable core may comprise three electrical conductors. That is particularly the case where the power cable is an AC cable. However, a power cable with three cores can be a DC cable as well. The power cable may comprise two electrical conductors, where the power cable is a DC cable. The power cable may comprise one electrical conductor, where the power cable is a DC cable. The power cable may comprise two electrical conductors, where the power cable is a DC cable, and the power cable may comprise a cable core which further comprises a filler, a tube, and/or a glass fibre.

In one aspect, the power cable may be a high voltage power cable, preferably a high voltage power cable suitable for operating between 50 kV and 1.100 kV, more preferred between 100 kV and 1.000 kV, even more preferred between 250 kV and 750 kV.

In one aspect, the power cable may comprise an armoring layer being arranged radially outside the water barrier sheath; wherein the armoring layer preferably may comprise a polymeric layer.

In one preferred embodiment of the above aspect, the polymeric layer may be fastened to the water barrier sheath by an adhesive layer, or wherein the water barrier sheath and the polymeric layer are not fastened together to allow movement between the polymeric layer and the water barrier sheath.

The embodiment where the polymeric layer is fastened to the water barrier sheath by the adhesive layer is associated with the beneficial effect of preventing movement between the polymeric layer and the water barrier sheath. On the contrary, the embodiment where the water barrier sheath and the polymeric layer is not fastened together is associated with the beneficial effect of allowing movement between the polymeric layer and the water barrier sheath. Both embodiments may have benefits depending on the concrete materials used and the concrete application of the power cable, i.e. subsea cable, dynamic cable, etc. Also, the diameter of the power cable might influence whether the above first embodiment or second embodiment is best.

In one aspect, the power cable may comprise an intermediate layer arranged radially between the electrically insulating layer and the water barrier sheath, wherein preferably the intermediate layer may comprise a material having a bulk modulus higher than 1 GPa.

In one aspect, the electrically insulating layer may have a thickness T_{I} of 5 mm to 50 mm, preferably 8 mm to 40 mm, more preferred 12 mm to 35 mm, most preferred 15 mm to 30 mm.

In one aspect, the metal layer of the water barrier sheath may be free of Pb. The term "free of Pb" means that the Sn alloy comprises less than 1 wt.% of Pb, preferably less than 0.1 wt.%, more preferred less than 0.01 wt.% of Pb. It might be the case, that Pb is part of unavoidable impurities. So, the alloy comprising zinc, or the zinc alloy may comprise 0.001 wt.% or more, or 0.05 wt.% or more of Pb.

Lead is the metal which is sought for replacement. It was found that alloys with such a small Pb content results in water barrier sheath still providing the above beneficial effects. Further, such metal alloys are technically accessible.

The invention's underlying problems are further solved by the subject-matter of claim 14. A second aspect of the invention therefore relates to a method of manufacturing a power cable comprising the steps of:
providing a cable core comprising an electrical conductor and an electrically insulating layer arranged radially outside of the electrical conductor, and
arranging a water barrier sheath comprising a metal layer radially around the cable core, wherein the metal layer comprises zinc, a metal alloy comprising zinc, or a zinc alloy, and
wherein the step of arranging the water barrier sheath includes extruding the metal layer or application of a longitudinally welded sheath, and wherein
the zinc alloy comprises, based on the total weight of the metal alloy, one of the following: 95 wt.% to 99.9 wt.% zinc and 5 wt.% to 0.1 wt.% magnesium; or 90 wt.% to 99.5 wt.% zinc and 10 wt.% to 0.5 wt.% copper; or 87 wt.% to 91.5 wt.% zinc, 8 wt.% to 12 wt.% aluminium, and 0.5 to 1.5 wt.% copper; or 78 wt.% to 92 wt.% zinc, 8 wt.% to 22 wt.% nickel, and the metal alloy comprising zinc comprises, based on the total weight of the metal alloy, one of the following: 90 wt.% to 94 wt.% aluminium, 2 wt.% to 7 wt.% zinc, and 0.1 wt.% to 4 wt.% magnesium; or 82 wt.% to 92 wt.% aluminium, 6 wt.% to 15 wt.% zinc, and 0.5 wt.% to 6 wt.% magnesium; or 90 wt.% to 94 wt.% aluminium, 2 wt.% to 7 wt.% zinc, 1 wt.% to 4 wt.% magnesium, and 1 wt.% to 2 wt.% copper.

The invention's underlying problems are further solved by the subject-matter of claim 15. A third aspect of the invention therefore relates to a use of a metal alloy comprising zinc, or a zinc alloy in a metal layer used for a water barrier sheath of a power cable, which alloys are both defined as in claim 1. Thus, the use concerns two alternatives, i.e. firstly the metal alloy comprising zinc, and secondly the zinc alloy.

Features being solely disclosed in connection with regard to the device of the invention, i.e. with regard to the power cable, are deemed to be disclosed in connection with the method of the invention and vice versa. Further, features being solely disclosed in connection with the device of the invention, i.e. with regard to the power cable, are deemed to be disclosed in connection with the use of the invention and vice versa.

### BRIEF DESCRIPTION OF DRAWINGS

Fig. 1 schematically illustrates one embodiment of the invention, where an example of a power cable cross section is shown comprising one cable core.
Fig. 2 schematically illustrates one embodiment of the invention, where an example of a power cable cross section comprising three cable cores is shown.

### DETAILED DESCRIPTION

In the following description, examples and embodiments of the invention are set forth in order to provide the skilled person with a more thorough understanding of the invention. The specific details described in the context of the various embodiments and with reference to the attached drawings are not intended to be construed as limitations.

Where a numerical limit or range is stated herein, the endpoints are included, except the numerical limit is explicitly associated with the term "less than" or "more than". Also, all values and sub ranges within a numerical limit or range are specifically included as if explicitly written out.

As mentioned above, the present invention provides a water barrier sheathing for power cables for land or submarine applications wherein the water barrier sheath is made of zinc, an alloy comprising zinc or a zinc alloy.

The water barrier sheathing may be either
- a longitudinally welded sheath (LWS) of zinc (Zn) or said alloys,
- an extruded metal sheath made of Zn or said alloys, or
- a laminate structure comprising a metal layer made of Zn or said alloys between at least two layers of insulating or non-insulating polymers.

The water barrier sheathing is preferably either
- a longitudinally welded sheath (LWS) of Zn or said alloys, or
- an extruded metal sheath made of Zn or said alloys.

Alternatively, the water barrier sheathing may be a laminate structure comprising a metal layer made of said alloys between at least two layers of insulating or non-insulating polymers.

Alternatively, the water barrier sheathing may be a laminate structure comprising a metal layer made of said alloys between at least two layers of insulating or non-insulating polymers.

### Definitions:

Percentage solution may refer to: Mass fraction (chemistry) (or "% w/w" or "wt. %."), for percent mass.

The term "high voltage" as applied herein refers to a voltage as defined above.

### Water barrier sheath made of a tin alloy

Similar to lead and e.g. tin, elementary zinc is a highly ductile metal with a relatively low melting temperature of around 420°C. The malleability of zinc is comparable to that of lead, it is sufficiently malleable at increased temperatures like e.g. 100°C.

Elements such as aluminium (Al), copper (Cu) and nickel (Ni) are the most commonly used alloying metals. As for aluminium, ZA (zinc-aluminum) alloys such as ZA8 or ZA12 are known, which have higher aluminum content (8-27%) for improving mechanical properties. Copper is also present in small amounts in many zinc die-casting alloys. Zinc-nickel alloys are implemented for improved corrosion resistance. Thus, the alloys comprising Zn and Zn alloys for use in a water barrier sheath are selected from commercially pure Zn, an alloy comprising zinc or a zinc alloy. Table 1 below depicts further details and embodiments of the water barrier sheath materials.

**Table 1: Exemplary alloys (Alloys 1 to 6 belong to the invention)**

| Alloy # | Zn [wt.%] | Ni [wt.%] | Al [wt.%] | Cu [wt.%] | Mg [wt.%] | Unavoidable impurities |
|---|---|---|---|---|---|---|
| 1 | <80 | >20 | 0 | 0 | | rest |
| 2 | <90 | >10 | 0 | 0 | | rest |
| 3 | 22 | 0 | 2 | 73.5 | | rest |
| 4 | 25 | | | 74.5 | | rest |
| 5 | 6.2 | | 91.4 | | 2.2 | rest |
| 6 | 5.8 | | 92.1 | 1.9 | 0.05 | rest |

It is noted that any percentage amount of a metal component in an alloy described herein is provided as a fraction of the weight of the metal per total weight of the alloy as a percentage, or [wt.%].

It will be appreciated by a skilled person that, where a range of a percentage amount of a metal in an alloy is given, the amount of metal in that alloy may vary within that range, provided the total amount of all metals in that alloy adds up to a total of 100 wt%.It will also be appreciated that some metals and alloys may inevitably have very small quantities of impurities within them. These unavoidable impurities may be present since they are typically either too difficult or costly to remove when the metal or alloy is being produced. These impurities may be present in the range from 0.0001%, 0.001%, 0.005% or 0.01% to 0.1%, 0.5%, <1% (wt) based on the total weight of the alloy and wherein each impurity does not exceed 0.5% by weight based on the total weight of the alloy. It will be appreciated that such impurities may be present in the metals and alloys of the present invention without affecting or departing from the scope of the invention and comprise the following substances bismuth, lead and silver.

### The power cable

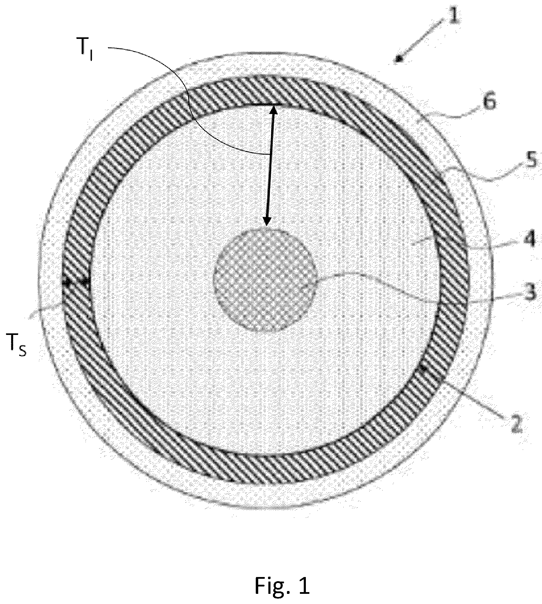

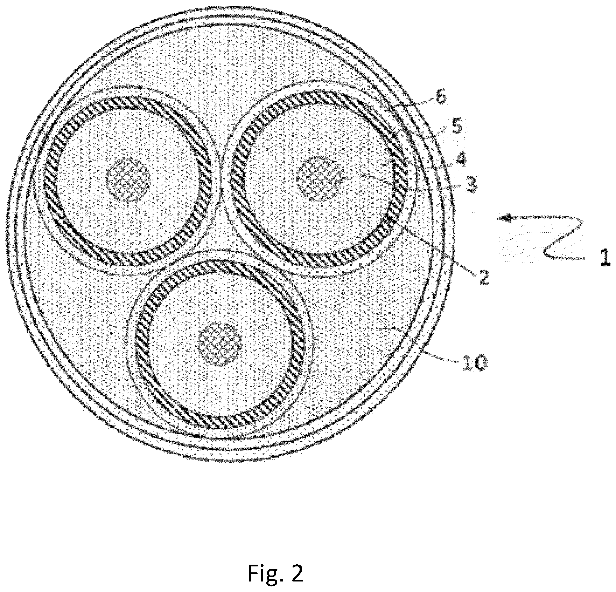

The invention is described further with reference to Fig. 1 and Fig. 2 of the drawings, which show a schematic of the cross-section of an embodiment of the cable of the invention.

Fig. 1 schematically illustrates an example of a cross section of a power cable 1, where the cable 1 is shown with one cable core 2. This invention is however not limited to a one-core cable, and the cable 1 may comprise two or any higher number of cores 2, as is deemed suitable for the cable's purposes. In Fig. 1, the thickness T_{I} refers to the thickness of the electrically insulating layer 4, and thickness T_{S} refers to the thickness of the water barrier sheath 5. Both are measured in radial direction from the interface of the adjacent layer in the direction to the center of the power cable to the interface of the adjacent layer in the direction to the surface of the power cable. Accordingly, Fig.2 illustrates an example of a power cable 1 cross section comprising three cable cores 2.

Each core 2 comprises an electrical conductor 3 arranged in the center of the core 2, and an electrically insulating layer 4 arranged radially outside each conductor 3. Outside the first electrically insulating layer 4, though not illustrated in the figures, there may be arranged a layer of sealing material disposed between the electrically insulating layer 4 and a water barrier sheath 5. This sealing material swells upon contact with water thereby working as an extra redundancy measure to prevent ingress of moisture in case of a crack or other failure in the water barrier sheath 5.

It should be noted that the cable 1, and variations thereof, may comprise additional layers, or filling material 10 as exemplified in Fig. 2, arranged radially outside each conductor 3 or the at least one cable core 2, which will not be described further herein. These layers and materials may be arranged inside, in-between or outside the already mentioned layers herein, and may comprise for example additional insulating, semiconducting, conducting, shielding and armouring layers as is well known in the art.

A polymer layer 6 may be extruded radially outside the water barrier sheath 5. This process is not detailed further herein since this is a well-known process in the art and will be apparent to the person skilled in the art.

The polymeric layer 6 may be fastened to the water barrier sheath 5 by an adhesive layer to prevent movement between the polymeric layer 6 and the water barrier sheath 5.

Alternatively, the water barrier sheath 5 and the polymeric layer 6 are not fastened together to allow movement between the polymeric layer and the water barrier sheath 5.

In other aspects of the invention, one cable core 2 may be put together with several other cable cores, as is illustrated in Fig. 2.

Power cables for intermediate to high current capacities have typically one or more electric conductors at their core followed by electric insulation and shielding of the conductors, an inner sheathing protecting the core, an armouring layer, and an outer polymer sheathing. The conductors of power cables are typically made of either aluminium or copper. The conductor may either be a single strand surrounded by electric insulating and shielding layers, or a number of strands arranged into a bunt being surrounded by electric insulating and shielding layers.

Additionally to the above mentioned parts of the cable, a power cable may also comprise one or more additional components depending on the intended properties and functionalities of the power cable.

The water barrier sheath as applied herein refers to a sheath comprising a layer made of tin or a tin alloy and wherein the sheath is either an extruded metal sheath, a longitudinally welded metal sheath (LWS) or a laminated metal sheath comprising a metal layer laminated between at least two layers of insulating or non-insulating polymer layers.

In a further aspect the water barrier sheath 5 includes a longitudinally welded sheathing. The sheathing may generally be manufactured by forming a precursor metal strip around the cable core welding the edges. The outer diameter of the welded sheath may thereafter be reduced by either drawing or rolling.

The rolling or drawing reduces the outer diameter of the water barrier sheath 5 in order to minimize the number and size of areas of gaps between the water barrier sheath 5 and the cable core 2.

Typically, the outer diameter of the water barrier sheath may be reduced between 1 mm to 5 mm in a controlled drawing or rolling process. Dependent on the efficacy of the drawing or rolling process, the size of the residual gaps may be reduced between 0.01 mm to 0.5 mm.

In another aspect, the water barrier sheath 5 includes a water barrier laminate, wherein the water barrier laminate 5 comprises a metal foil made of a tin-based material selected from a commercially pure Sn material or a Sn alloy laminated between at least two layers of insulating or non-insulating polymer constituting a final laminate that is insulating or non-insulating.

Isolating and non-isolating polymer layers for use in the laminated structure are well known to a skilled person and examples of non-isolating polymer layers may be found in EP 2 437 272.

The term "metal foil" as used herein, refers to a metal layer of tin or a tin alloy which is placed in the middle of the laminate structure. The invention is not tied to use of any specific thickness T_{S} of the metal foil. Any thickness T_{S} known to be suited for use in water barrier sheaths in power cables by the skilled person may be applied. In one example embodiment, the metal foil is a tin or tin alloy disclosed in tables 1 to 4 above. The thickness T_{S} of the metal foil may be in one of the following ranges: from 10 to 250 µm, from 15 to 200 µm, from 20 to 150 µm, from 25 to 100 µm, and from 30 to 75 µm.

The laminated structure may be wrapped around the cable core 2 with at least some overlap between opposite edges of the laminate structure and wherein the opposite edges of the laminate structure are joined by thermal heating.

In a manufacturing process for a power cable the water barrier sheath may be extruded forming an extruded sheath. Alternatively, the water barrier sheath is applied in form a longitudinally welded sheath.

In another aspect the power cable may comprise an intermediate layer (not shown) that is arranged radially between the electrically insulating layer 4 and the water barrier sheath 5.

The intermediate layer is configured so as to absorb residual spacing between the cable core 2 and the water barrier sheath 5 when the power cable is subject to reduction through drawing or rolling. The power cable may be a subsea power cable. In this aspect the subsea power cable is also subject to compression from high water pressure due to the large water depth at which the power cable is located during use.

The intermediate layer arranged radially between the electrically insulating layer and the water barrier sheath, may comprise a material having a bulk modulus higher than 1 GPa.

As can be seen from the following Table 2, the mechanical properties of yield strength (YS), ultimate tensile strength (UTS), elongation at break, and micro-hardness, all being measured under commonly known conditions, show a steep increase in the respective properties.

**Tab. 2: Mechanical properties of zinc vs. zinc alloys**

| Sample | YS (MPa) | UTS (MPa) | Elongation at break (%) | Micro-hardness (HV) |
|---|---|---|---|---|
| Pure Zn | 30 ± 6 | 97 ± 7 | 8 ± 2 | 41 ± 2 |
| Zn-0.5Mg | 192 ± 13 | 219 ± 7 | 28 ± 6 | 73 ± 2 |
| Zn-1Mg | 222 ± 6 | 260 ± 8 | 11 ± 1 | 90 ± 6 |
| Zn*-*3Cu | 128 ± 4 | 147 ± 1 | 117 ± 14 | 67 ± 3 |
| Zn-5Cu | 154 ± 5 | 208 ± 2 | 117 ± 21 | 73 ± 5 |

The data in Tab. 2 shows the mechanical parameters obtained after tensile and micro-hardness testing. Tab. 2 shows the benefits of alloys of zinc, especially alloys comprising magnesium or copper.

## Claims

1. A power cable (1) comprising
- a cable core (2) comprising an electrical conductor (3) and an electrically insulating layer (4) surrounding the electrical conductor (3), and
- a water barrier sheath (5) surrounding the cable core (2), wherein the water barrier sheath (5) comprises a metal layer, wherein the metal layer comprises a metal alloy comprising zinc, or a zinc alloy, **characterized in that**
the zinc alloy comprises, based on the total weight of the metal alloy, one of the following:
95 wt.% to 99.9 wt.% zinc and 5 wt.% to 0.1 wt.% magnesium; or
90 wt.% to 99.5 wt.% zinc and 10 wt.% to 0.5 wt.% copper; or
87 wt.% to 91.5 wt.% zinc, 8 wt.% to 12 wt.% aluminium, and 0.5 to 1.5 wt.% copper; or
78 wt.% to 92 wt.% zinc, 8 wt.% to 22 wt.% nickel, and
the metal alloy comprising zinc comprises, based on the total weight of the metal alloy, one of the following:
90 wt.% to 94 wt.% aluminium, 2 wt.% to 7 wt.% zinc, and 0.1 wt.% to 4 wt.% magnesium; or
82 wt.% to 92 wt.% aluminium, 6 wt.% to 15 wt.% zinc, and 0.5 wt.% to 6 wt.% magnesium; or
90 wt.% to 94 wt.% aluminium, 2 wt.% to 7 wt.% zinc, 1 wt.% to 4 wt.% magnesium, and 1 wt.% to 2 wt.% copper.

2. The power cable (1) according to claim 1, wherein the metal layer comprises a metal alloy comprising zinc or the metal layer comprises the zinc alloy, wherein the metal alloy comprising zinc, or the zinc alloy comprises at least one metal X together with unavoidable impurities, wherein X is selected from aluminium, copper, nickel, magnesium, manganese, chromium, or zirconium; preferably wherein X is selected from aluminium, copper, nickel and magnesium, more preferred aluminium, copper and nickel.

3. The power cable (1) according to claim 1, wherein the zinc alloy comprises, based on the total weight of the metal alloy, one of the following:
98 wt.% to 99.8 wt.% zinc and 2 wt.% to 0.2 wt.% magnesium; preferably 99 wt.% to 99.5 wt.% zinc and 1 wt.% to 0.5 wt.% magnesium; or
92 wt.% to 97 wt.% zinc and 8 wt.% to 3 wt.% copper; preferably 94 wt.% to 98 wt.% zinc and 6 wt.% to 2 wt.% copper; or
88 wt.% to 91 wt.% zinc, 9 to 11.5 wt.% aluminium, and 0.8 to 1.4 wt.% copper; or
80 wt.% to 90 wt.% zinc, 10 wt.% to 20 wt.% nickel.

4. The power cable (1) according to claim 1, wherein the metal alloy comprising zinc comprises, based on the total weight of the metal alloy, one of the following:
91 wt.% to 93 wt.% aluminium, 3 wt.% to 6 wt.% zinc, and 0.5 wt.% to 3 wt.% magnesium; or
84 wt.% to 90 wt.% aluminium, 8 wt.% to 13 wt.% zinc, and 2 wt.% to 5 wt.% magnesium; or
91 wt.% to 93 wt.% aluminium, 3 wt.% to 6 wt.% zinc, 1 wt.% to 3 wt.% magnesium, and 1.1 wt.% to 1.9 wt.% copper.

5. The power cable (1) according to any one of claims 1 to 4, wherein the water barrier sheath (5) is an extruded metal sheath or a longitudinally welded sheath.

6. The power cable (1) according to any one of claims 1 to 5, wherein the power cable (1) is a subsea cable or a land cable, preferably a subsea cable.

7. The power cable (1) according to any one of claims 1 to 6, wherein the power cable (1) comprises at least one of following:
three electrical conductors (3);
two electrical conductors (3);
a filler;
a tube;
a glass fibre.

8. The power cable (1) according to any one of claims 1 to 7, wherein the power cable (1) is a high voltage power cable, preferably a high voltage power cable suitable for operating between 50 kV and 1.100 kV, more preferred between 100 kV and 1.000 kV, even more preferred between 250 kV and 750 kV.

9. The power cable (1) according to any one of claims 1 to 8, comprising an armoring layer being arranged radially outside the water barrier sheath (5); wherein the armoring layer preferably comprises a polymeric layer (6).

10. The power cable (1) according to claim 9, wherein the polymeric layer (6) is fastened to the water barrier sheath (5) by an adhesive layer, or wherein the water barrier sheath (5) and the polymeric layer (6) are not fastened together.

11. The power cable (1) according to any one of claims 1 to 10, comprising an intermediate layer arranged radially between the electrically insulating layer (4) and the water barrier sheath (5), wherein preferably the intermediate layer comprises a material having a bulk modulus higher than 1 GPa.

12. The power cable (1) according to any one of claims 1 to 11, wherein the electrically insulating layer (4) has a thickness T_{I} of 5 mm to 50 mm, preferably 8 mm to 40 mm, more preferred 12 mm to 35 mm, most preferred 15 mm to 30 mm.

13. The power cable (1) according to claims 1 to 12, wherein the metal layer of the water barrier sheath (5) is free of Pb.

14. A method of manufacturing a power cable (1) comprising the steps of:
- providing a cable core (2) comprising an electrical conductor (3) and an electrically insulating layer (4) arranged radially outside of the electrical conductor (3), and
- arranging a water barrier sheath (5) comprising a metal layer radially around the cable core (2), wherein the metal layer comprises a metal alloy comprising zinc, or a zinc alloy, and
wherein the step of arranging the water barrier sheath (5) includes extruding the metal layer or application of a longitudinally welded sheath, **characterized in that**
the zinc alloy comprises, based on the total weight of the metal alloy, one of the following:
95 wt.% to 99.9 wt.% zinc and 5 wt.% to 0.1 wt.% magnesium; or
90 wt.% to 99.5 wt.% zinc and 10 wt.% to 0.5 wt.% copper; or
87 wt.% to 91.5 wt.% zinc, 8 wt.% to 12 wt.% aluminium, and 0.5 to 1.5 wt.% copper; or
78 wt.% to 92 wt.% zinc, 8 wt.% to 22 wt.% nickel, and
the metal alloy comprising zinc comprises, based on the total weight of the metal alloy, one of the following:
90 wt.% to 94 wt.% aluminium, 2 wt.% to 7 wt.% zinc, and 0.1 wt.% to 4 wt.% magnesium; or
82 wt.% to 92 wt.% aluminium, 6 wt.% to 15 wt.% zinc, and 0.5 wt.% to 6 wt.% magnesium; or
90 wt.% to 94 wt.% aluminium, 2 wt.% to 7 wt.% zinc, 1 wt.% to 4 wt.% magnesium, and 1 wt.% to 2 wt.% copper.

15. Use of a metal alloy comprising zinc, or a zinc alloy used for a water barrier sheath (5) of a power cable (1),
**characterized in that**
the zinc alloy comprises, based on the total weight of the metal alloy, one of the following:
95 wt.% to 99.9 wt.% zinc and 5 wt.% to 0.1 wt.% magnesium; or
90 wt.% to 99.5 wt.% zinc and 10 wt.% to 0.5 wt.% copper; or
87 wt.% to 91.5 wt.% zinc, 8 wt.% to 12 wt.% aluminium, and 0.5 to 1.5 wt.% copper; or
78 wt.% to 92 wt.% zinc, 8 wt.% to 22 wt.% nickel, and
the metal alloy comprising zinc comprises, based on the total weight of the metal alloy, one of the following:
90 wt.% to 94 wt.% aluminium, 2 wt.% to 7 wt.% zinc, and 0.1 wt.% to 4 wt.% magnesium; or
82 wt.% to 92 wt.% aluminium, 6 wt.% to 15 wt.% zinc, and 0.5 wt.% to 6 wt.% magnesium; or
90 wt.% to 94 wt.% aluminium, 2 wt.% to 7 wt.% zinc, 1 wt.% to 4 wt.% magnesium, and 1 wt.% to 2 wt.% copper.

## Patentansprüche

1. Energiekabel (1), umfassend
- eine Kabelseele (2), die einen elektrischen Leiter (3) und eine elektrisch isolierende Schicht (4), die den elektrischen Leiter (3) umgibt, umfasst, und
- einen die Kabelseele (2) umgebenden Wassersperrmantel (5), wobei der Wassersperrmantel (5) eine Metallschicht umfasst, wobei die Metallschicht eine Zink umfassende Metalllegierung oder eine Zinklegierung umfasst, **dadurch gekennzeichnet, dass**
die Zinklegierung, basierend auf dem Gesamtgewicht der Metalllegierung, eines von Folgendem umfasst:
95 Gew.-% bis 99,9 Gew.-% Zink und 5 Gew.-% bis 0,1 Gew.-% Magnesium; oder
90 Gew.-% bis 99,5 Gew.-% Zink und 10 Gew.-% bis 0,5 Gew.-% Kupfer; oder
87 Gew.-% bis 91,5 Gew.-% Zink, 8 Gew.-% bis 12 Gew.-% Aluminium und 0,5 bis 1,5 Gew.-% Kupfer; oder
78 Gew.-% bis 92 Gew.-% Zink, 8 Gew.-% bis 22 Gew.-% Nickel, und
die Zink umfassende Metalllegierung basierend auf dem Gesamtgewicht der Metalllegierung eines von Folgendem umfasst:
90 Gew.-% bis 94 Gew.-% Aluminium, 2 Gew.-% bis 7 Gew.-% Zink und 0,1 Gew.-% bis 4 Gew.-% Magnesium; oder
82 Gew.-% bis 92 Gew.-% Aluminium, 6 Gew.-% bis 15 Gew.-% Zink und 0,5 Gew.-% bis 6 Gew.-% Magnesium; oder
90 Gew.-% bis 94 Gew.-% Aluminium, 2 Gew.-% bis 7 Gew.-% Zink, 1 Gew.-% bis 4 Gew.-% Magnesium und 1 Gew.-% bis 2 Gew.-% Kupfer.

2. Energiekabel (1) nach Anspruch 1, wobei die Metallschicht eine Zink umfassende Metalllegierung umfasst oder die Metallschicht die Zinklegierung umfasst, wobei die Zink umfassende Metalllegierung oder die Zinklegierung mindestens ein Metall X zusammen mit unvermeidbaren Verunreinigungen umfasst, wobei X ausgewählt ist aus Aluminium, Kupfer, Nickel, Magnesium, Mangan, Chrom oder Zirkonium; vorzugsweise wobei X ausgewählt ist aus Aluminium, Kupfer, Nickel und Magnesium, weiter bevorzugt Aluminium, Kupfer und Nickel.

3. Energiekabel (1) nach Anspruch 1, wobei die Zinklegierung, basierend auf dem Gesamtgewicht der Metalllegierung, eines von Folgendem umfasst:
98 Gew.-% bis 99,8 Gew.-% Zink und 2 Gew.-% bis 0,2 Gew.-% Magnesium; vorzugsweise 99 Gew.-% bis 99,5 Gew.-% Zink und 1 Gew.-% bis 0,5 Gew.-% Magnesium; oder
92 Gew.-% bis 97 Gew.-% Zink und 8 Gew.-% bis 3 Gew.-% Kupfer; vorzugsweise 94 Gew.-% bis 98 Gew.-% Zink und 6 Gew.-% bis 2 Gew.-% Kupfer; oder
88 Gew.-% bis 91 Gew.-% Zink, 9 bis 11,5 Gew.-% Aluminium und 0,8 bis 1,4 Gew.-% Kupfer; oder
80 Gew.-% bis 90 Gew.-% Zink, 10 Gew.-% bis 20 Gew.-% Nickel.

4. Energiekabel (1) nach Anspruch 1, wobei die Zink umfassende Metalllegierung, basierend auf dem Gesamtgewicht der Metalllegierung, eines von Folgendem umfasst:
91 Gew.-% bis 93 Gew.-% Aluminium, 3 Gew.-% bis 6 Gew.-% Zink und 0,5 Gew.-% bis 3 Gew.-% Magnesium; oder
84 Gew.-% bis 90 Gew.-% Aluminium, 8 Gew.-% bis 13 Gew.-% Zink und 2 Gew.-% bis 5 Gew.-% Magnesium; oder
91 Gew.-% bis 93 Gew.-% Aluminium, 3 Gew.-% bis 6 Gew.-% Zink, 1 Gew.-% bis 3 Gew.-% Magnesium und 1.1 Gew.-% bis 1.9 Gew.-% Kupfer.

5. Energiekabel (1) nach einem der Ansprüche 1 bis 4, wobei der Wassersperrmantel (5) ein extrudierter Metallmantel oder ein längsgeschweißter Mantel ist.

6. Energiekabel (1) nach einem der Ansprüche 1 bis 5, wobei das Energiekabel (1) ein Unterwasserkabel oder ein Landkabel, vorzugsweise ein Unterwasserkabel, ist.

7. Energiekabel (1) nach einem der Ansprüche 1 bis 6, wobei das Energiekabel (1) mindestens eines von Folgendem umfasst:
drei elektrische Leiter (3);
zwei elektrische Leiter (3);
einen Füllstoff;
eine Röhre;
eine Glasfaser.

8. Energiekabel (1) nach einem der Ansprüche 1 bis 7, wobei das Energiekabel (1) ein Hochspannungsenergiekabel ist, vorzugsweise ein Hochspannungsenergiekabel, das zum Betrieb zwischen 50 kV und 1.100 kV, weiter bevorzugt zwischen 100 kV und 1.000 kV, noch weiter bevorzugt zwischen 250 kV und 750 kV, geeignet ist.

9. Energiekabel (1) nach einem der Ansprüche 1 bis 8, umfassend eine Armierungsschicht, die radial außerhalb des Wassersperrmantels (5) angeordnet ist; wobei die Armierungsschicht vorzugsweise eine Polymerschicht (6) umfasst.

10. Energiekabel (1) nach Anspruch 9, wobei die Polymerschicht (6) durch eine Klebstoffschicht an dem Wassersperrmantel (5) befestigt ist oder wobei der Wassersperrmantel (5) und die Polymerschicht (6) nicht aneinander befestigt sind.

11. Energiekabel (1) nach einem der Ansprüche 1 bis 10, umfassend eine Zwischenschicht, die radial zwischen der elektrisch isolierenden Schicht (4) und dem Wassersperrmantel (5) angeordnet ist, wobei vorzugsweise die Zwischenschicht ein Material mit einem Volumenmodul von mehr als 1 GPa umfasst.

12. Energiekabel (1) nach einem der Ansprüche 1 bis 11, wobei die elektrisch isolierende Schicht (4) eine Dicke T_{I} von 5 mm bis 50 mm, vorzugsweise 8 mm bis 40 mm, weiter bevorzugt 12 mm bis 35 mm, am meisten bevorzugt 15 mm bis 30 mm, aufweist.

13. Energiekabel (1) nach den Ansprüchen 1 bis 12, wobei die Metallschicht des Wassersperrmantels (5) frei von Pb ist.

14. Verfahren zum Herstellen eines Energiekabels (1), umfassend die folgenden Schritte:
- Bereitstellen einer Kabelseele (2), die einen elektrischen Leiter (3) und eine elektrisch isolierende Schicht (4), die radial außerhalb des elektrischen Leiters (3) angeordnet ist, umfasst, und
- Anordnen eines eine Metallschicht umfassenden Wassersperrmantels (5) radial um die Kabelseele (2), wobei die Metallschicht eine Zink umfassende Metalllegierung oder eine Zinklegierung umfasst, und
wobei der Schritt des Anordnens des Wassersperrmantels (5) ein Extrudieren der Metallschicht oder ein Aufbringen eines längsgeschweißten Mantels beinhaltet, **dadurch gekennzeichnet, dass** die Zinklegierung, basierend auf dem Gesamtgewicht der Metalllegierung, eines von Folgendem umfasst:
95 Gew.-% bis 99,9 Gew.-% Zink und 5 Gew.-% bis 0,1 Gew.-% Magnesium; oder
90 Gew.-% bis 99,5 Gew.-% Zink und 10 Gew.-% bis 0,5 Gew.-% Kupfer; oder
87 Gew.-% bis 91,5 Gew.-% Zink, 8 Gew.-% bis 12 Gew.-% Aluminium und 0,5 bis 1,5 Gew.-% Kupfer; oder
78 Gew.-% bis 92 Gew.-% Zink, 8 Gew.-% bis 22 Gew.-% Nickel, und
die Zink umfassende Metalllegierung basierend auf dem Gesamtgewicht der Metalllegierung eines von Folgendem umfasst:
90 Gew.-% bis 94 Gew.-% Aluminium, 2 Gew.-% bis 7 Gew.-% Zink und 0,1 Gew.-% bis 4 Gew.-% Magnesium; oder
82 Gew.-% bis 92 Gew.-% Aluminium, 6 Gew.-% bis 15 Gew.-% Zink und 0,5 Gew.-% bis 6 Gew.-% Magnesium; oder
90 Gew.-% bis 94 Gew.-% Aluminium, 2 Gew.-% bis 7 Gew.-% Zink, 1 Gew.-% bis 4 Gew.-% Magnesium und 1 Gew.-% bis 2 Gew.-% Kupfer.

15. Verwendung einer Zink umfassenden Metalllegierung oder einer Zinklegierung, die für einen Wassersperrmantel (5) eines Energiekabels (1) verwendet wird, **dadurch gekennzeichnet, dass**
die Zinklegierung, basierend auf dem Gesamtgewicht der Metalllegierung, eines von Folgendem umfasst:
95 Gew.-% bis 99,9 Gew.-% Zink und 5 Gew.-% bis 0,1 Gew.-% Magnesium; oder
90 Gew.-% bis 99,5 Gew.-% Zink und 10 Gew.-% bis 0,5 Gew.-% Kupfer; oder
87 Gew.-% bis 91,5 Gew.-% Zink, 8 Gew.-% bis 12 Gew.-% Aluminium und 0,5 bis 1,5 Gew.-% Kupfer; oder
78 Gew.-% bis 92 Gew.-% Zink, 8 Gew.-% bis 22 Gew.-% Nickel, und
die Zink umfassende Metalllegierung basierend auf dem Gesamtgewicht der Metalllegierung eines von Folgendem umfasst:
90 Gew.-% bis 94 Gew.-% Aluminium, 2 Gew.-% bis 7 Gew.-% Zink und 0,1 Gew.-% bis 4 Gew.-% Magnesium; oder
82 Gew.-% bis 92 Gew.-% Aluminium, 6 Gew.-% bis 15 Gew.-% Zink und 0,5 Gew.-% bis 6 Gew.-% Magnesium; oder
90 Gew.-% bis 94 Gew.-% Aluminium, 2 Gew.-% bis 7 Gew.-% Zink, 1 Gew.-% bis 4 Gew.-% Magnesium und 1 Gew.-% bis 2 Gew.-% Kupfer.

## Revendications

1. Câble d'alimentation (1) comprenant
- une âme de câble (2) comprenant un conducteur électrique (3) et une couche électriquement isolante (4) entourant le conducteur électrique (3), et
- une gaine barrière à l'eau (5) entourant l'âme de câble (2), dans lequel la gaine barrière à l'eau (5) comprend une couche métallique, dans lequel la couche métallique comprend un alliage de métal comprenant du zinc, ou un alliage de zinc, **caractérisé en ce que**
l'alliage de zinc comprend, sur la base du poids total de l'alliage métallique, l'un des suivants :
95 % en poids à 99,9 % en poids de zinc et 5 % en poids à 0,1 % en poids de magnésium ; ou
90 % en poids à 99,5 % en poids de zinc et 10 % en poids à 0,5 % en poids de cuivre ; ou
87 % en poids à 91,5 % en poids de zinc, 8 % en poids à 12 % en poids d'aluminium et 0,5 à 1,5 % en poids de cuivre ; ou
78 % en poids à 92 % en poids de zinc, 8 % en poids à 22 % en poids de nickel, et
l'alliage métallique comprenant du zinc comprend, sur la base du poids total de l'alliage métallique, l'un des suivants :
90 % en poids à 94 % en poids d'aluminium, 2 % en poids à 7 % en poids de zinc et 0,1 % en poids à 4 % en poids de magnésium ; ou
82 % en poids à 92 % en poids d'aluminium, 6 % en poids à 15 % en poids de zinc et 0,5 % en poids à 6 % en poids de magnésium ; ou
90 % en poids à 94 % en poids d'aluminium, 2 % en poids à 7 % en poids de zinc, 1 % en poids à 4 % en poids de magnésium et 1 % en poids à 2 % en poids de cuivre.

2. Câble d'alimentation (1) selon la revendication 1, dans lequel la couche métallique comprend un alliage métallique comprenant du zinc ou la couche métallique comprend l'alliage de zinc, dans lequel l'alliage métallique comprenant du zinc, ou l'alliage de zinc comprend au moins un métal X avec des impuretés inévitables, dans lequel X est choisi parmi l'aluminium, le cuivre, le nickel, le magnésium, le manganèse, le chrome ou le zirconium ; de préférence dans lequel X est choisi parmi l'aluminium, le cuivre, le nickel et le magnésium, plus préférentiellement l'aluminium, le cuivre et le nickel.

3. Câble d'alimentation (1) selon la revendication 1, dans lequel l'alliage de zinc comprend, sur la base du poids total de l'alliage métallique, l'un des suivants :
98 % en poids à 99,8 % en poids de zinc et 2 % en poids à 0,2 % en poids de magnésium ; de préférence 99 % en poids à 99,5 % en poids de zinc et 1 % en poids à 0,5 % en poids de magnésium ; ou
92 % en poids à 97 % en poids de zinc et 8 % en poids à 3 % en poids de cuivre ; de préférence 94 % en poids à 98 % en poids de zinc et 6 % en poids à 2 % en poids de cuivre ; ou
88 % en poids à 91 % en poids de zinc, 9 à 11,5 % en poids d'aluminium et 0,8 à 1,4 % en poids de cuivre ; ou
80 % en poids à 90 % en poids de zinc, 10 % en poids à 20 % en poids de nickel.

4. Câble d'alimentation (1) selon la revendication 1, dans lequel l'alliage métallique comprenant du zinc comprend, sur la base du poids total de l'alliage métallique, l'un des suivants :
91 % en poids à 93 % en poids d'aluminium, 3 % en poids à 6 % en poids de zinc et 0,5 % en poids à 3 % en poids de magnésium ; ou
84 % en poids à 90 % en poids d'aluminium, 8 % en poids à 13 % en poids de zinc et 2 % en poids à 5 % en poids de magnésium ; ou
91 % en poids à 93 % en poids d'aluminium, 3 % en poids à 6 % en poids de zinc, 1 % en poids à 3 % en poids de magnésium et 1,1 % en poids à 1,9 % en poids de cuivre.

5. Câble d'alimentation (1) selon l'une quelconque des revendications 1 à 4, dans lequel la gaine barrière à l'eau (5) est une gaine métallique extrudée ou une gaine soudée longitudinalement.

6. Câble d'alimentation (1) selon l'une quelconque des revendications 1 à 5, dans lequel le câble d'alimentation (1) est un câble sous-marin ou un câble terrestre, de préférence un câble sous-marin.

7. Câble d'alimentation (1) selon l'une quelconque des revendications 1 à 6, dans lequel le câble d'alimentation (1) comprend au moins l'un des suivants :
trois conducteurs électriques (3) ;
deux conducteurs électriques (3) ;
une charge ;
un tube ;
une fibre de verre.

8. Câble d'alimentation (1) selon l'une quelconque des revendications 1 à 7, dans lequel le câble d'alimentation (1) est un câble d'alimentation haute tension, de préférence un câble d'alimentation haute tension approprié pour fonctionner entre 50 kV et 1 100 kV, plus préférablement entre 100 kV et 1 000 kV, encore plus préférablement entre 250 kV et 750 kV.

9. Câble d'alimentation (1) selon l'une quelconque des revendications 1 à 8, comprenant une couche de blindage disposée radialement à l'extérieur de la gaine barrière à l'eau (5) ; dans lequel la couche de blindage comprend de préférence une couche polymère (6).

10. Câble d'alimentation (1) selon la revendication 9, dans lequel la couche polymère (6) est fixée à la gaine barrière à l'eau (5) par une couche adhésive, ou dans lequel la gaine barrière à l'eau (5) et la couche polymère (6) ne sont pas fixées ensemble.

11. Câble d'alimentation (1) selon l'une quelconque des revendications 1 à 10, comprenant une couche intermédiaire agencée radialement entre la couche électriquement isolante (4) et la gaine barrière à l'eau (5), dans lequel de préférence la couche intermédiaire comprend un matériau ayant un module de compressibilité supérieur à 1 GPa.

12. Câble d'alimentation (1) selon l'une quelconque des revendications 1 à 11, dans lequel la couche électriquement isolante (4) présente une épaisseur T_{I} de 5 mm à 50 mm, de préférence de 8 mm à 40 mm, plus préférablement de 12 mm à 35 mm, le plus préférablement de 15 mm à 30 mm.

13. Câble d'alimentation (1) selon les revendications 1 à 12, dans lequel la couche métallique de la gaine barrière à l'eau (5) est exempte de Pb.

14. Procédé de fabrication d'un câble d'alimentation (1) comprenant les étapes de :
- fourniture d'une âme de câble (2) comprenant un conducteur électrique (3) et une couche électriquement isolante (4) agencée radialement à l'extérieur du conducteur électrique (3), et
- agencement d'une gaine barrière à l'eau (5) comprenant une couche métallique radialement autour de l'âme de câble (2), dans lequel la couche métallique comprend un alliage de métal comprenant du zinc, ou un alliage de zinc, et
dans lequel l'étape d'agencement de la gaine barrière à l'eau (5) comprend l'extrusion de la couche métallique ou l'application d'une gaine soudée longitudinalement, **caractérisé en ce que** l'alliage de zinc comprend, sur la base du poids total de l'alliage métallique, l'un des suivants :
95 % en poids à 99,9 % en poids de zinc et 5 % en poids à 0,1 % en poids de magnésium ; ou
90 % en poids à 99,5 % en poids de zinc et 10 % en poids à 0,5 % en poids de cuivre ; ou
87 % en poids à 91,5 % en poids de zinc, 8 % en poids à 12 % en poids d'aluminium et 0,5 à 1,5 % en poids de cuivre ; ou
78 % en poids à 92 % en poids de zinc, 8 % en poids à 22 % en poids de nickel, et
l'alliage métallique comprenant du zinc comprend, sur la base du poids total de l'alliage métallique, l'un des suivants :
90 % en poids à 94 % en poids d'aluminium, 2 % en poids à 7 % en poids de zinc et 0,1 % en poids à 4 % en poids de magnésium ; ou
82 % en poids à 92 % en poids d'aluminium, 6 % en poids à 15 % en poids de zinc et 0,5 % en poids à 6 % en poids de magnésium ; ou
90 % en poids à 94 % en poids d'aluminium, 2 % en poids à 7 % en poids de zinc, 1 % en poids à 4 % en poids de magnésium et 1 % en poids à 2 % en poids de cuivre.

15. Utilisation d'un alliage de métal comprenant du zinc, ou d'un alliage de zinc utilisé pour une gaine barrière à l'eau (5) d'un câble d'alimentation (1),
**caractérisé en ce que**
l'alliage de zinc comprend, sur la base du poids total de l'alliage métallique, l'un des suivants :
95 % en poids à 99,9 % en poids de zinc et 5 % en poids à 0,1 % en poids de magnésium ; ou
90 % en poids à 99,5 % en poids de zinc et 10 % en poids à 0,5 % en poids de cuivre ; ou
87 % en poids à 91,5 % en poids de zinc, 8 % en poids à 12 % en poids d'aluminium et 0,5 à 1,5 % en poids de cuivre ; ou
78 % en poids à 92 % en poids de zinc, 8 % en poids à 22 % en poids de nickel, et
l'alliage métallique comprenant du zinc comprend, sur la base du poids total de l'alliage métallique, l'un des suivants :
90 % en poids à 94 % en poids d'aluminium, 2 % en poids à 7 % en poids de zinc et 0,1 % en poids à 4 % en poids de magnésium ; ou
82 % en poids à 92 % en poids d'aluminium, 6 % en poids à 15 % en poids de zinc et 0,5 % en poids à 6 % en poids de magnésium ; ou
90 % en poids à 94 % en poids d'aluminium, 2 % en poids à 7 % en poids de zinc, 1 % en poids à 4 % en poids de magnésium et 1 % en poids à 2 % en poids de cuivre.
